# EUROPÄISCHE PATENTSCHRIFT

(11) **EP 2 898 766 B1**
(45) Veröffentlichungstag und Bekanntmachung des Hinweises auf die Patenterteilung: **29.11.2017**
(21) Anmeldenummer: 15000225.1
(22) Anmeldetag: 27.01.2015
(51) Int. Cl.: A01G 9/24, A01G 13/04, A01G 9/16

(54) **Schließ- und Lüftungssystem zur Regelung des Luftstroms in Zimmergewächshäusern**
Closing and ventilation system for regulating air flow to indoor greenhouses
Système d'aération et de fermeture destiné au réglage du flux d'air dans des serres d'intérieur

(30) Priorität: 28.01.2014 DE 202014000642 U
(43) Veröffentlichungstag der Anmeldung: 29.07.2015
(73) Patentinhaber: Sauermann, Denis, 13503 Berlin (DE)
(72) Erfinder: Sauermann, Denis, 13503 Berlin (DE)
(74) Vertreter: Wüstefeld, Regine Marie

(56) Entgegenhaltungen:
- GB-A- 2 257 006
- US-A- 419 370
- US-A- 2 950 567
- US-A- 4 160 340
- US-A1- 2010 282 745

## Beschreibung

Die vorliegende Erfindung betrifft ein Schließ- und Lüftungssystem zur Regulierung des Luftstroms in Zimmergewächshäusern, die einen Rahmen aufweisen, der aus Stangen über entsprechende Verbindungsstücke gebildet ist und einen im wesentlichen licht- und luftundurchlässigen Überzug sowie ein Bodenelement, wobei durch den Überzug Decken- sowie Seiten- und Türelemente gebildet sind.

Zimmergewächshäuser sind bereits seit längerem bekannt, vgl. die Druckschrift US-A-2010/0282745. Grundsätzlich können solche Zimmergewächshäuser aus einem Rahmen bestehen, der aus Stangen über entsprechende Verbindungsstücke gebildet wird. Über diesen Rahmen wird dann ein licht- und luftundurchlässiger Überzug aus einer zumeist laminierten, mehrschichtigen Folie in Form eines Zeltes aufgezogen und über zumindest einen Reißverschluß geschlossen. Die nach dem Aufbau des Zimmergewächshauses zur Verfügung stehende Fläche kann individuell zum Aufziehen von Saat- und Pflanzgut verwendet werden.
Zimmergewächshäuser dieser Art müssen einerseits mit frischer Luft versorgt werden, und andererseits ist es erforderlich, verbrauchte Luft als Abluft wieder zu entfernen. Hierfür bedarf es einer geeigneten Luftzirkulation, für die außerdem noch die Anforderung besteht, daß sie je nach Bedarf stärker oder geringer zu regeln ist.

Bekannte Maßnahmen, um dies zu erreichen, sind oft aufwendig, der Aufbau des Zimmergewächshauses für den Laien wird dadurch oft komplizierter. Das Zimmergewächshaus wird insgesamt störungsanfälliger und die Energiebilanz wird durch z.B. einen höheren Stromverbrauch verschlechtert. So kann beispielsweise vorgesehen sein, daß in bekannten Zimmergewächshäusern ein Absaugventilator angebracht ist. Dadurch wird ein Kamineffekt erzielt, der für eine ausreichende Luftzirkulation sorgt. Fällt dieser Ventilator aus, ist keine zufriedenstellende Luftzirkulation mehr möglich.
Davon ausgehend lag der vorliegenden Erfindung die Aufgabe zugrunde, ein Zimmergewächshaus bereit zu stellen, das eine einfache und gleichzeitig effektive Luftversorgung ermöglicht, die zudem variabel an die jeweiligen Bedürfnisse angepaßt werden kann.

Gelöst wird diese Aufgabe durch ein Zimmergewächshaus gemäss Anspruch 1, das aus einem Rahmen, der aus Stangen über entsprechende Verbindungsstücke gebildet ist und einen im wesentlichen licht- und luftundurchlässigen Überzug sowie ein Bodenelement aufweist, wobei durch den Überzug Decken- sowie Seiten- und Türelemente gebildet und zumindest eines der Seiten- und/oder Türelemente mit einer Aussparung versehen ist, und wobei zu der Aussparung zwei Schließelemente in der Weise korrespondieren, daß sie in Form und Größe der Aussparung angepaßt und größer als die Aussparung ausgebildet sind.
Auf diese konstruktiv einfache Weise wird ein Zimmergewächshaus bereitgestellt, dessen individuelle Lüftung bzw. Luftversorgung einfach und doch effektiv erreicht wird. Indem zumindest eines der Seiten- und/oder Türelemente mit einer Aussparung versehen ist, kann in einfacher Weise ganz effektiv für eine Lüftung/Luftfluktuation gesorgt werden.
Gemäß einer weiteren vorteilhaften Ausbildung des Zimmergewächshauses kann vorgesehen sein, daß zumindest zwei der Seiten- und/oder Türelemente jeweils mit einer Aussparung versehen sind, wobei zu jeder dieser Aussparungen jeweils zwei Schließelemente in der Weise korrespondieren, daß sie in Form und Größe den Aussparungen angepaßt und größer als die Aussparungen ausgebildet sind. Indem zwei der Seiten- und/oder Türelemente mit einer Aussparung versehen sind, wobei es bevorzugt ist, daß hierfür zwei Seitenelemente ausgewählt werden, wird die Lüftung/Luftfluktuation noch optimiert. Beide der Aussparungen können flexibel sowohl als passiver Luftein- oder auslaß dienen, und sie können das Zimmergewächshaus luftdicht verschließen, ohne daß hierfür bisher übliche Maßnahmen, wie Klettverschlüsse, erforderlich sind.
Dabei ist es nicht von vornherein festgelegt, welche der Aussparungen als Lufteinlaß und welche als Luftauslaß fungiert. Beide der Aussparungen können je nach Luftstrom ohne Unterschied beide genannten Funktionen ausüben.
Gemäß einer bevorzugten Ausführungsform des erfindungsgemäßen Zimmergewächshauses kann es vorgesehen sein, daß die Aussparungen an einander gegenüberliegenden Seiten- und/oder Türelementen, vorzugsweise an einander gegenüberliegenden Seitenelementen des Zimmergewächshauses, angeordnet sind.
Auf diese Weise kann der Luftstrom insbesondere bei größeren Zimmergewächshäusern weiter optimiert werden.

Außerdem kann vorgesehen sein, daß die Aussparungen und die Schließelemente im wesentlichen kreisrund ausgebildet sind.
In Versuchen hat sich gezeigt, daß die Zufuhr der frischen Luft und das Abführen der verbrauchten Luft und die auf diese Weise bewirkte Lüftung/Luftfluktuation mit im wesentlichen kreisrunden Aussparungen und Schließelementen am besten erreicht werden kann. Die beiden jeweils einer Aussparung zugeordneten Schließelemente sind einander gegenüberliegend in der Weise angeordnet, daß sich das eine Schließelement im Innenbereich des jeweiligen Seiten- und/oder Türelements befindet und das andere Schließelement an der Außenseite dieses jeweiligen Seiten- und/oder Türelements angeordnet ist.
Diese Ausbildung ermöglicht nicht nur eine Lüftung/Luftfluktuation und eine Erneuerung verbrauchter Luft, sondern nun kann auch noch eine nochmals verbesserte und gezielt geregelte, bedarfsgerechte Luftzu- und -abfuhr ermöglicht werden.
Es gibt Wachstumsstadien, in denen die gegebenenfalls in dem Zimmergewächshaus zunächst zum Keimen gebrachten und dann wachsen gelassenen Pflanzen einen stärkeren oder einen geringeren Frischluftbedarf aufweisen.

Grundsätzlich gilt, daß die beiden an einer Aussparung angeordneten Schließelemente zur Regelung der Luftzu- und -abfuhr und des Luftstromes unabhängig voneinander geöffnet oder geschlossen sein können. Der geöffnete Zustand bedeutet, daß das jeweilige Schließelement zumindest zeitweilig entfernt ist. Dabei können beide der Schließelemente entfernt worden sein, nur eines derselben oder keines der beiden.
Sind die beiden Schließelemente in der beschriebenen Weise einander gegenüberliegend an der Aussparung angeordnet, bedeutet dies eine Feinregulierung des Luftstromes, die dadurch möglich wird.

Noch einmal verbessert wird diese Feinregulierung dann, wenn gemäß noch einer erfindungsgemäßen Weiterbildung an dem jeweiligen, die Aussparung aufweisenden Seiten- und/oder Türelement in Nachbarschaft zu der jeweiligen Aussparung innen und außen umlaufende Säume gebildet sind, für eine Befestigung der Schließelemente durch ein Einstecken in die Säume.
Zunächst wird durch diese Ausgestaltung des Zimmergewächshauses eine besonders vereinfachte Handhabung der Luftregulierung erreicht. Die Schließelemente müssen lediglich in den Raum zwischen den Säumen eingesteckt werden. Zusätzlich ergibt sich noch der Vorteil, daß die Schließelemente nicht nur vollständig eingesteckt oder entfernt sein können. Es kann auch vorgesehen sein, daß eines der beiden Schließelemente oder auch beide nur teilweise, z.B. halb entfernt sind.

Dann ist die Aussparung ein- oder beidseitig halb geöffnet und ermöglicht eine besonders feine Regulierung der Luftzu- und -abfuhr.

Außerdem können die Schließelemente eine Lasche aufweisen. Damit wird die Handhabung der Regulierung des Luftstroms in dem Zimmergewächshaus nochmals weiter vereinfacht, da das vollständige oder teilweise Herausziehen der Schließelemente über die jeweils an dem Schließelement angebrachte Lasche erfolgen kann.

Wenn das im Innenbereich des jeweiligen Seiten- und/oder Türelements befindliche Schließelement mit einer nach innen weisenden Beschichtung mit hohem Reflexionsvermögen, vorzugsweise in Form einer weißen Folie oder einer Folie mit Silberbeschichtung ausgebildet ist, wird dadurch die ansonsten in dem Zimmergewächshaus ebenso vorgesehene Ausbildung des Innenraums in einer Weise, daß ein hohes Reflexionsvermögen erhalten wird, ergänzt, und es kommt zu keinem Qualitätsverlust im Rahmen der Lichtreflexion.

Dasselbe gilt umgekehrt, wenn das an der Außenseite des jeweiligen Seiten- und/oder Türelements angeordnete Schließelement mit einer Beschichtung mit hohem Absorptionsvermögen, vorzugsweise aus einem schwarzen Material gebildet ist. Das schwarze Material kann dabei ein Gewebe, wie ein Kunststoffgewebe, z.B. ein Polyestergewebe, sein. Damit werden die ansonsten bei der Ausbildung des Zimmergewächshauses vorgesehenen Maßnahmen zur (Licht-) Isolierung wirksam unterstützt.

Zusätzlich kann außerdem vorgesehen sein, daß die jeweiligen Aussparungen mit einem luftdurchlässigen Material, vorzugsweise mit einem Netzmaterial, versehen sind.
Auf diese Weise bleibt das Innere des Zimmergewächshauses geschützt. Es können keine Insekten, andere Tiere oder sonstige störende Gegenstände, insbesondere keine Schädlinge in das Zimmergewächshaus eindringen und der erfindungsgemäße Lüftungseffekt kann ohne Störungen gewährleistet werden.

Im folgenden soll die Erfindung anhand eines Ausführungsbeispiels im Zusammenhang mit der beigefügten Zeichnung näher erläutert werden.

Es zeigen:
- Fig. 1:: eine schematische Ansicht eines erfindungsgemäßen Zimmergewächshauses mit zwei Aussparungen für dessen Lüftung,
- Fig. 2a:: eine schematische Darstellung eines unvollständig dargestellten Zimmergewächshauses mit einer einzigen Aussparung und der entsprechenden Luftzirkulation,
- Fig. 2b:: eine schematische Darstellung nur einer Aussparung des Zimmergewächshauses mit herausgenommenen Schließelementen und der daraus resultierenden Luftzirkulation,
- Fig. 2c-e:: eine schematische Darstellung nur einer Aussparung des Zimmergewächshauses mit den dazugehörigen Schließelementen und der resultierenden Luftzirkulation,
- Fig. 3a:: eine teilweise Ansicht eines Seitenelements des Zimmergewächshauses mit Aussparung und den dazugehörigen Schließelementen,
- Fig. 3b:: eine teilweise Ansicht eines Seitenelements des Zimmergewächshauses mit Aussparung und Saum,
- Fig. 3c:: eine teilweise Ansicht eines Seitenelements des Zimmergewächshauses mit Aussparung und Saum, die das Einpassen eines Schließelements zeigt, und
- Fig. 3d:: eine teilweise Ansicht eines Seitenelements des Zimmergewächshauses mit Aussparung und eingepaßtem, teilweise geöffnetem Schließelement.

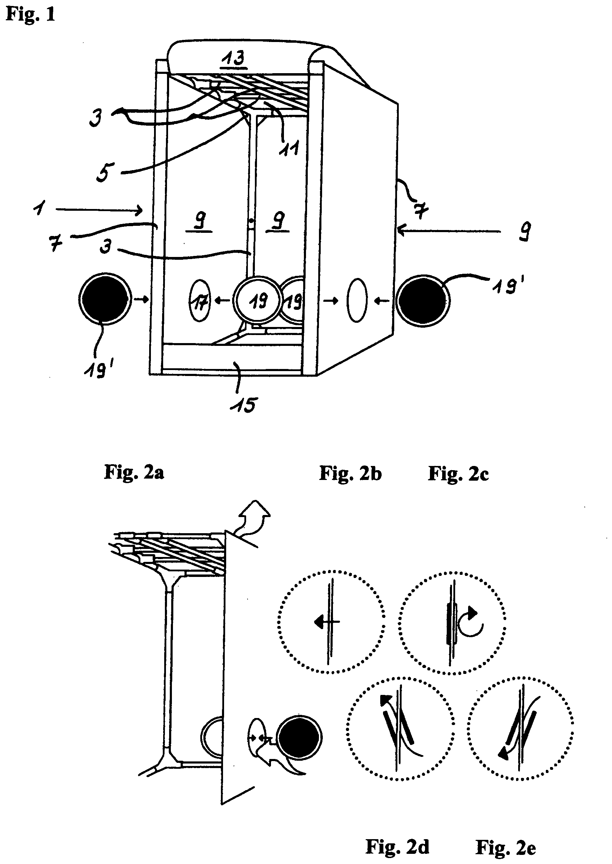

In Fig. 1 ist ein Zimmergewächshaus dargestellt und insgesamt mit der Bezugsziffer 1 bezeichnet. Gebildet wird das Zimmergewächshaus 1 aus einem Rahmen, der aus Stangen 3 mit entsprechenden Verbindungsstücken 5 gebildet ist. Im dargestellten Ausführungsbeispiel sind die Stangen 3 Metallstangen in Form von Rund-Stahlrohren, welche in die als Führungen dienenden Verbindungsstücke 5 eingeschoben werden. Bei den Verbindungsstücken 5 handelt es sich in diesem Ausführungsbeispiel um Kunststoffteile. Es ist aber genauso möglich, daß anstelle der Kunststoffteile Metall-Verbindungsstücke verwendet werden

Über den Rahmen wird ein im wesentlichen licht- und luftundurchlässiger Überzug 7 gespannt, der insgesamt einstückig ausgebildet ist. Der Überzug 7 ist als eine reißfeste, licht- und luftdichte Bespannung ausgebildet, die mehrschichtig ist und im Ausführungsbeispiel nach außen hin aus einem 600d Webstoff besteht, auf den zunächst eine schwarze Polyethylenfolie aus Polyestergewebe laminiert worden ist und im Anschluß daran noch eine die innerste Schicht der Bespannung bildende weiße Folie mit einem entsprechend hohen Reflexionsvermögen im Innenraum des Zimmergewächshauses. Alternativ kann die innerste Schicht der als Überzug 7 dienenden Bespannung aus einer Silberfolie oder einem sonstigen reflektierenden Material gebildet sein.

Der Überzug 7 weist im Ausführungsbeispiel drei Seitenelemente 9 auf, welche die Seitenwände des Zimmergewächshauses 1 bilden, sowie ein Deckenelement 11 und ein Türelement 13. Verschlossen wird das Zimmergewächshaus 1 durch im Ausführungsbeispiel an dem Türelement 13 beidseitig an dessen Längsseiten verlaufende Reißverschlüsse, die in der schematischen Ansicht von Fig. 1 nicht ausdrücklich dargestellt sind. Bei den verwendeten Reißverschlüssen handelt es sich um eine für diesen Verwendungszweck handelsüblich erhältliche Ware. Zur Vervollständigung weist das Zimmergewächshaus ein separates Bodenelement auf, das ebenfalls nicht ausdrücklich dargestellt ist, und einen im unteren Abschluß des Türbereichs angebrachten Absatz 15.

Alle Bestandteile des Zimmergewächshauses sind für die Zwecke ihres Aufbaus paßgenau aufeinander abgestimmt, so daß es für ihre Verbindung keinerlei weiteren Hilfsmittel bedarf.

Zusätzlich sind in dem dargestellten, der Erläuterung der Erfindung dienenden Ausführungsbeispiel zwei der Seitenelemente 9 des Zimmergewächshauses 1, die einander gegenüberliegen, jeweils mit einer Aussparung 17 versehen, die in diesem Ausführungsbeispiel im wesentlichen kreisrund ausgebildet sind. Zu jeder der Aussparungen 17 korrespondieren jeweils zwei Schließelemente 19, 19' in der Weise, daß sie in Form und Größe der jeweiligen Aussparung 17 angepaßt und größer als die Aussparung ausgebildet sind. Entsprechend sind die Schließelemente 19, 19' im Ausführungsbeispiel ebenfalls im wesentlichen kreisrund.

An der jeweiligen Aussparung 17 sind die Schließelemente 19, 19' in der Weise angeordnet, daß sie einander gegenüber liegen, wobei sich das mit der Bezugsziffer 19 bezeichnete Schließelement im Innenbereich des jeweiligen Seitenelements 9 befindet und das mit der Bezugsziffer 19' bezeichnete Schließelement 19' an der Außenseite dieses jeweiligen Seitenelements 9.

Grundsätzlich ist die Erfindung nicht darauf beschränkt, daß die der Lüftung, d.h. der Luftventilation und -zirkulation in dem Zimmergewächshaus 1 dienenden Aussparungen 17 und entsprechend die damit korrespondierenden Schließelemente 19, 19' nur an den Seitenelementen 9 des Zimmergewächshauses 1 angebracht sind. Es können auch jeweils ein Seitenelement 9 und ein Türelement 11 mit zumindest einer der Aussparungen 17 und den Schließelementen 19, 19' versehen sein. Diese müssen auch nicht zwangsläufig einander gegenüberliegen. So können beispielsweise eines der dem Türelement 11 benachbarten Seitenelemente 9 und das Türelement 11 mit zumindest einer der Aussparungen 17 und den Schließelementen 19, 19' versehen sein.

Die Erfindung ist auch nicht darauf beschränkt, daß zumindest zwei solcher Aussparungen 17 an dem Zimmergewächshaus 1 vorhanden sind. Das Zimmergewächshaus 1 kann in ganz unterschiedlichen Größen und Dimensionen hergestellt werden. Insbesondere bei kleineren Ausführungen des Zimmergewächshauses 1 hat es sich gezeigt, daß auch eine einzige Aussparung 17 und die damit korrespondierenden Schließelemente 19, 19' ausreichend sind, um flexibel als passiver Luftein- oder -auslaß zu dienen oder das Zimmergewächshaus 1 luftdicht zu verschließen, ohne daß für das Verschließen weitere, bisher übliche Maßnahmen, wie Klettverschlüsse, erforderlich sind.
Dies ist in Fig. 2a an einem nur unvollständig dargestellten Zimmergewächshaus veranschaulicht, wobei die Pfeile die Luftzirkulation zeigen.

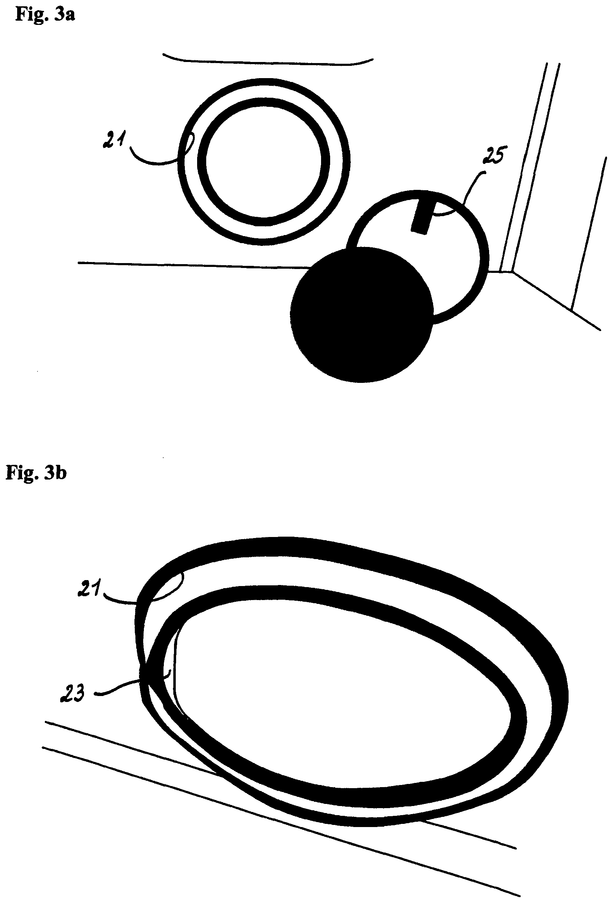

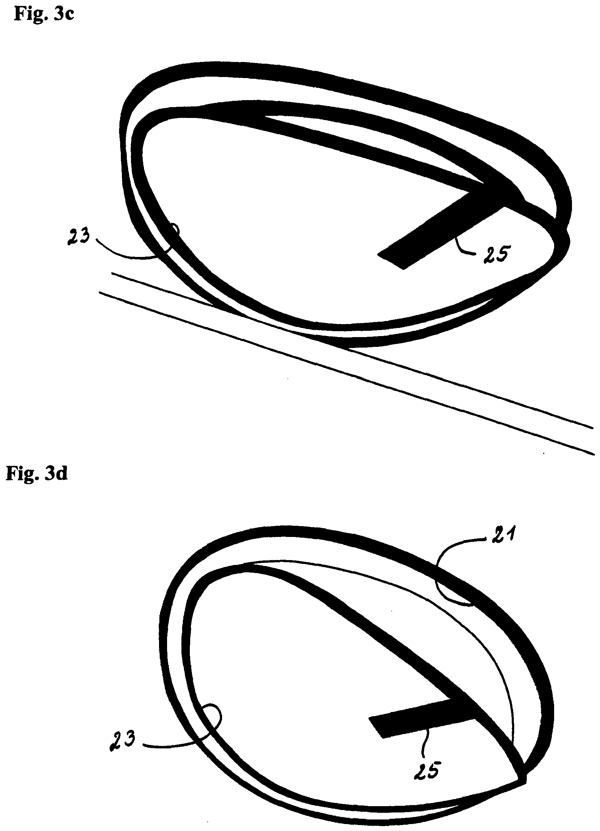

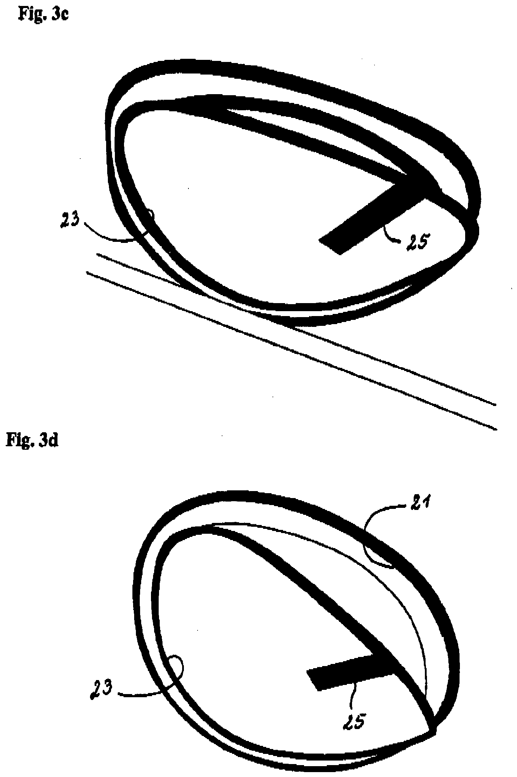

An dem die jeweilige Aussparung 17 aufweisenden Seitenelement 9 und/oder je nach Ausführung gegebenenfalls in dem Türelement 13 sind in Nachbarschaft zu der Aussparung 17 innen und außen umlaufende Säume 21 gebildet, die aus den Darstellungen der Fig. 3a bis 3d ersichtlich sind. Diese Säume 21 bilden eine Tasche 23, welche am besten aus Fig. 3b ersichtlich ist, in denen die Schließelemente 19, 19' durch Einstecken gehalten werden.
Diese Konstruktion ermöglicht es, daß die Schließelemente 19, 19' nach Wunsch ganz oder nur teilweise in die durch die Säume 21 gebildete Tasche 23 eingesteckt werden. Bei einem teilweise Einstecken schaut der nicht eingesteckte Teil des jeweiligen Schließelements 19, 19' aus der Aussparung 17 heraus und bildet in dem Umfang einen teilweisen Luftdurchlaß. Auf diese Weise kann die Luftzufuhr, d.h. allgemein die Luftventilation und -zirkulation ohne großen konstruktiven Aufwand wirksam nach Bedarf gesteuert werden.
In den Fig. 2b bis 2e sind mögliche Stellungen der Schließelemente 19, 19' dargestellt. So zeigt Fig. 2c eine beidseitig durch die Schließelemente 19, 19' verschlossene Aussparung 17. In Fig. 2d sind die Schließelemente 19, 19' so gehalten, daß das eine davon nach oben hin geöffnet ist, während das andere Schließelement sich nach unten hin öffnet. Dadurch wird ein gezielter Luftweg definiert, den ein Pfeil kenntlich macht. Fig. 2e unterscheidet sich von Fig. 2d dadurch, daß die Schließelemente sich genau gegengleich öffnen, und veranschaulicht, daß sich dadurch auch der Luftweg ändert, wie der entsprechende Pfeil zeigt.

Um das Herausnehmen und das gezielte teilweise Entfernen der Schließelemente 19, 19' zu erleichtern, weisen die Schließelemente 19, 19' jeweils eine Lasche 25 auf, wie dies aus den Fig. 3a und 3b - 3d ersichtlich ist.

Wie auch die Bespannung des Zimmergewächshauses 1, welche seinen Überzug 7 bildet, weist das im Innenbereich des jeweiligen Seitenelements 9 befindliche Schließelement 19, bei anderer Ausführung gegebenenfalls das in dem Türelement 13 befindliche Schließelement 19, eine nach innen weisenden Beschichtung mit hohem Reflexionsvermögen auf. Dieses kann durch eine weiße Folie oder eine Folie mit Silberbeschichtung erreicht werden.

Entsprechend ist das an der Außenseite des jeweiligen Seitenelements 9 und/oder Türelements 13 angeordnete Schließelement beidseitig mit einer Beschichtung mit hohem Absorptionsvermögen, im Ausführungsbeispiel aus einem schwarzen Polyestergewebe, gebildet.

Um das Innere des Zimmergewächshauses 1 vor dem Eindringen von Fremdkörpern aller Art, wie Insekten, anderen Tieren oder sonstigen störenden Gegenständen, zu schützen, ist jede der Aussparungen 17 mit einem luftdurchlässigen Netzmaterial versehen. Die erläuterte, erfindungsgemäße Lüftung wird dadurch nicht beeinträchtigt.

## Patentansprüche

1. Zimmergewächshaus, mit einem Rahmen, der aus Stangen (3) über entsprechende Verbindungsstücke (5) gebildet ist und einen im wesentlichen licht- und luftundurchlässigen Überzug (7) sowie ein Bodenelement aufweist, wobei durch den Überzug (7) Decken (11)- sowie Seiten (9)- und Türelemente (13) gebildet sind, **dadurch gekennzeichnet, daß** zumindest eines der Seiten (9)- und/oder Türelemente (13) mit einer Aussparung (17) versehen ist, wobei zu der Aussparung (17) zwei Schließelemente (19, 19') in der Weise korrespondieren, daß sie in Form und Größe der Aussparung (17) angepaßt, dabei größer als die Aussparung (17) ausgebildet und einander gegenüberliegend in der Weise angeordnet sind, daß sich das eine Schließelement (19) im Innenbereich des jeweiligen Seiten (9)- und/oder Türelements (13) befindet und das andere Schließelement (19') an der Außenseite dieses jeweiligen Seiten (9)- und/oder Türelements (13) angeordnet ist.

2. Zimmergewächshaus nach Anspruch 1, **dadurch gekennzeichnet, daß** zumindest zwei der Seiten (9)- und/oder Türelemente (13) jeweils mit einer Aussparung (17) versehen sind, wobei zu jeder dieser Aussparungen (17) jeweils zwei Schließelemente (19, 19') in der Weise korrespondieren, daß sie in Form und Größe den Aussparungen (17) angepaßt und größer als die Aussparungen (17) ausgebildet sind.

3. Zimmergewächshaus nach Anspruch 2, **dadurch gekennzeichnet, daß** die Aussparungen (17) an einander gegenüberliegenden Seiten (9)- und/oder Türelementen (13), vorzugsweise an einander gegenüberliegenden Seitenelementen (9) angeordnet sind.

4. Zimmergewächshaus nach einem der Ansprüche 1 bis 3, **dadurch gekennzeichnet, daß** die zumindest eine Aussparung (17) und die Schließelemente (19, 19') im wesentlichen kreisrund ausgebildet sind.

5. Zimmergewächshaus nach einem der Ansprüche 1 bis 4, **dadurch gekennzeichnet, daß** an dem jeweiligen, die Aussparung (17) aufweisenden Seiten (9) - und/oder Türelement (13) in Nachbarschaft zu der jeweiligen Aussparung innen und außen umlaufende Säume (21) gebildet sind, für eine Befestigung der Schließelemente (19, 19') durch ein Einstecken in die Säume (21).

6. Zimmergewächshaus nach einem der Ansprüche 1 bis 5, **dadurch gekennzeichnet, daß** die Schließelemente (19, 19') eine Lasche (25) aufweisen.

7. Zimmergewächshaus nach einem der Ansprüche 4 bis 6, **dadurch gekennzeichnet, daß** das im Innenbereich des jeweiligen Seiten (9)- und/oder Türelements (13) befindliche Schließelement (19) mit einer nach innen weisenden Beschichtung mit hohem Reflexionsvermögen, vorzugsweise in Form einer weißen Folie oder einer Folie mit Silberbeschichtung ausgebildet ist.

8. Zimmergewächshaus nach einem der Ansprüche 4 bis 7, **dadurch gekennzeichnet, daß** das an der Außenseite des jeweiligen Seiten- und/oder Türelements angeordnete Schließelement (19') mit einer Beschichtung mit hohem Absorptionsvermögen, vorzugsweise aus einem schwarzen Material ausgebildet ist.

9. Zimmergewächshaus nach einem der Ansprüche 1 bis 8, **dadurch gekennzeichnet, daß** die jeweiligen Aussparungen (17) mit einem luftdurchlässigen Material, vorzugsweise mit einem Netzmaterial, versehen sind.

## Claims

1. Propagator having a frame which is formed from rods (3), via corresponding connectors (5), and has an essentially light-impermeable and air-impermeable covering (7) and a floor element, wherein, the cover (7) forms a ceiling element (11), side elements (9) and a door element (13), **characterized in that** at least one of the side (9) and/or door elements (13) is provided with an aperture (17), wherein two closing elements (19, 19') correspond with the aperture (17) such that they are adapted to the aperture (17) in terms of shape and size, are designed to be larger than the aperture (17) and are arranged opposite one another such that the one closing element (19) is located in the inner region of the respective side element (9) and/or door element (13) and the other closing element (19') is arranged on the outer side of said respective side element (9) and/or door element (13).

2. Propagator according to Claim 1, **characterized in that** at least two of the side (9) and/or door elements (13) are each provided with an aperture (17), wherein in each case two closing elements (19, 19') correspond with each of these apertures (17) such that they are adapted to the apertures (17) in terms of shape and size and are designed to be larger than the apertures (17).

3. Propagator according to Claim 2, **characterized in that** the apertures (17) are arranged on mutually opposite side (9) and/or door elements (13), preferably on mutually opposite side elements (9).

4. Propagator according to one of Claims 1 to 3, **characterised in that** the at least one aperture (17) and the closing elements (19, 19') are essentially circular.

5. Propagator according to one of Claims 1 to 4, **characterized in that** the respective side element (9) and/or door element (13), having the aperture (17), have/has formed therein, adjacent to the respective aperture, internally and externally encircling borders (21), in order for the closing elements (19, 19') to be fastened as a result of being fitted into the borders (21).

6. Propagator according to one of Claims 1 to 5, **characterized in that** the closing elements (19, 19') have a lug (25).

7. Propagator according to one of Claims 4 to 6, **characterized in that** the closing element (19), which is located in the inner region of the respective side element (9) and/or door element (13), is designed with an inwardly oriented coating with high-level reflection capability, preferably in the form of a white film or of a film with silver coating.

8. Propagator according to one of Claims 4 to 7, **characterized in that** the closing element (19'), which is arranged on the outer side of the respective side element and/or door element, is designed with a coating with high-level absorption capability, preferably made of a black material.

9. Propagator according to one of Claims 1 to 8, **characterized in that** the respective apertures (17) are provided with an air-permeable material, preferably with a netting material.

## Revendications

1. Serre d'intérieur, comprenant un cadre qui est formé de barres (3) par le biais de pièces de liaison correspondantes (5) et qui présente un revêtement (7) essentiellement transparent et étanche à l'air ainsi qu'un élément de sol, des éléments de plafond (11) ainsi que des éléments de côté (9) et des éléments de porte (13) étant formés par le revêtement (7), **caractérisée en ce qu'**au moins l'un des éléments de côté (9) et/ou des éléments de porte (13) est pourvu d'un évidement (17), deux éléments de fermeture (19, 19') correspondant à l'évidement (17) de telle sorte qu'ils soient adaptés en forme et en taille à l'évidement (17), en étant réalisés plus grands que l'évidement (17) et en étant disposés en regard l'un de l'autre de telle sorte que l'un des éléments de fermeture (19) se trouve dans la région intérieure de l'élément de côté respectif (9) et/ou de l'élément de porte respectif (13) et l'autre élément de fermeture (19') soit disposé au niveau du côté extérieur de cet élément de côté respectif (9) et/ou de cet élément de porte respectif (13).

2. Serre d'intérieur selon la revendication 1, **caractérisée en ce qu'**au moins deux des éléments de côté (9) et/ou des éléments de porte (13) sont chacun pourvus d'un évidement (17), deux éléments de fermeture (19, 19') correspondant à chaque fois à chacun de ces évidements (17) de telle sorte qu'ils soient adaptés en forme et en taille aux évidements (17) en étant réalisés plus grands que les évidements (17).

3. Serre d'intérieur selon la revendication 2, **caractérisée en ce que** les évidements (17) sont disposés au niveau d'éléments de côtés (9) en regard l'un de l'autre et/ou d'éléments de porte (13) en regard l'un de l'autre, de préférence au niveau d'éléments de côté (9) en regard l'un de l'autre.

4. Serre d'intérieur selon l'une quelconque des revendications 1 à 3, **caractérisée en ce que** l'au moins un évidement (17) et les éléments de fermeture (19, 19') sont réalisés essentiellement sous forme ronde circulaire.

5. Serre d'intérieur selon l'une quelconque des revendications 1 à 4, **caractérisée en ce qu'**au niveau de l'élément de côté (9) et/ou de l'élément de porte (13) respectif présentant l'évidement (17), à proximité de l'évidement respectif, sont formés des ourlets périphériques intérieur et extérieur (21) pour une fixation des éléments de fermeture (19, 19') par enfichage dans les ourlets (21) .

6. Serre d'intérieur selon l'une quelconque des revendications 1 à 5, **caractérisée en ce que** les éléments de fermeture (19, 19') présentent une patte (25).

7. Serre d'intérieur selon l'une quelconque des revendications 4 à 6, **caractérisée en ce que** l'élément de fermeture (19) se trouvant dans la région intérieure de l'élément de côté (9) et/ou de l'élément de porte (13) respectif est réalisé avec un revêtement tourné vers l'intérieur ayant un fort pouvoir de réflexion, de préférence sous la forme d'un film blanc ou d'un film avec un revêtement argenté.

8. Serre d'intérieur selon l'une quelconque des revendications 4 à 7, **caractérisée en ce que** l'élément de fermeture (19') disposé du côté extérieur de l'élément de côté et/ou de l'élément de porte respectif est réalisé avec un revêtement ayant un fort pouvoir d'absorption, de préférence en un matériau noir.

9. Serre d'intérieur selon l'une quelconque des revendications 1 à 8, **caractérisée en ce que** les évidements respectifs (17) sont pourvus d'un matériau perméable à l'air, de préférence d'un matériau en filet.
